# EUROPÄISCHE PATENTSCHRIFT

(11) **EP 2 393 859 B1**
(45) Veröffentlichungstag und Bekanntmachung des Hinweises auf die Patenterteilung: **05.12.2012**
(21) Anmeldenummer: 10701107.4
(22) Anmeldetag: 23.01.2010
(51) Int. Cl.: C08G 18/10, C08G 18/48, C09D 175/12

(54) **ZWEIKOMPONENTEN-BESCHICHTUNGSZUSAMMENSETZUNGEN FÜR FLEXIBLE BESCHICHTUNGEN**
TWO-COMPONENT COATING COMPOSITIONS FOR FLEXIBLE COATINGS
COMPOSITIONS DE REVÊTEMENTS À DEUX COMPOSANTS POUR REVÊTEMENTS SOUPLES

(30) Priorität: 03.02.2009 DE 102009007194
(43) Veröffentlichungstag der Anmeldung: 14.12.2011
(73) Patentinhaber: Bayer MaterialScience AG, 51368 Leverkusen (DE)
(72) Erfinder: WAMPRECHT, Christian, 41472 Neuss (DE); HOMANN, Malte, 51519 Odenthal (DE)
(86) Internationale Anmeldenummer: PCT/EP2010/000408
(87) Internationale Veröffentlichungsnummer: WO 2010/089034

(56) Entgegenhaltungen:
- WO-A1-2007/039133
- US-A- 5 440 003
- US-B1- 6 180 745

## Beschreibung

Die vorliegende Erfindung betrifft Beschichtungssysteme zur Herstellung schnell trocknender flexibler Beschichtungen auf Basis von aromatischen allophanatgruppenhaltigen Prepolymeren und aliphatischen Polyisocyanaten sowie aminofunktionellen Polyasparaginsäureestem als Härter.

Zweikomponenten-Beschichtungssysteme auf Polyurethan- oder Polyharnstoff Basis sind bekannt und werden in der Technik bereits eingesetzt. In der Regel enthalten sie eine flüssige Polyisocyanatkomponente und eine flüssige isocyanatreaktive Komponente. Durch Reaktion von Polyisocyanaten mit Aminen als isocyanatreaktive Komponente entstehen stark vernetzte Polyharnstoff-Beschichtungen. Primäre Amine und Isocyanate reagieren jedoch meistens sehr schnell miteinander. Typische Topf- oder Gelierzeiten betragen oft nur einige Sekunden bis wenige Minuten. Deshalb können solche Polyharnstoff- Beschichtungen nicht manuell, sondern nur mit speziellen Spritzapparaturen appliziert werden. Solche Beschichtungen besitzen jedoch ausgezeichnete physikalische Eigenschaften.

Eine aus der Literatur bekannte Methode, diese hohe Reaktivität zu reduzieren, ist die Verwendung von Prepolymeren mit niedrigem NCO-Gehalt. Durch den Einsatz von NCO-funktionellen Prepolymeren in Kombination mit Aminen können flexible Polyhamstoffbeschichtungen hergestellt werden.

US-A 3 428 610 und US-A 4 463 126 offenbaren die Herstellung von Polyurethan/PolyharnstoffElastomeren durch Aushärtung von NCO-funktionellen Prepolymeren mit aromatischen Diaminen. Bevorzugt sind dies di-primäre aromatische Diamine, welche in ortho-Position zu jeder Aminogruppe mindestens einen Alkylsubstituenten mit 2-3 Kohlenstoffatomen und gegebenenfalls außerdem in weiteren ortho-Positionen zu den Aminogruppen Methylsubstituenten aufweisen, wie zum Beispiel Diethyltoluyldiamin (DETDA).

US-A 3 428 610 und US-A 4 463 126 beschreibt ein Verfahren zur Herstellung von lösemittelfreien elastischen Beschichtungen, bei dem auf Isophorondiisocyanat (IPDI) und Polyetherpolyolen basierende NCO-Prepolymere bei Raumtemperatur mit sterisch gehinderten di-primären aromatischen Diaminen ausgehärtet werden.

Von Nachteil ist bei solchen Systemen, dass die aromatischen Diamine zu starker Vergilbung neigen.

Eine weitere Möglichkeit, die Reaktion zwischen Polyisocyanaten und Aminen zu verzögern, ist die Verwendung von sekundären Aminen. EP-A 0 403 921, US-A 5 126 170 und WO 2007/039133 offenbaren die Bildung von Polyharnstoff-Beschichtungen durch Reaktion von Polyasparaginsäureestern mit Polyisocyanaten. Polyasparaginsäureester besitzen eine niedrige Viskosität und eine verringerte Reaktivität gegenüber Polyisocyanaten und können daher zur Herstellung lösemittelfreier Beschichtungsmittel mit verlängerten Topfzeiten eingesetzt werden. Ein zusätzlicher Vorteil von Polyasparaginsäureestern ist, dass die Produkte farblos sind.

Farblose, aliphatische Polyisocyanatprepolymere auf Basis von Polyetherpolyolen härten hingegen langsam mit Polyasparaginsäureestern, und die Beschichtungen besitzen oft eine klebrige Oberfläche. Polyisocyanatprepolymere gemäß WO 2007/039133 härten zwar mit Polyasparaginsäureestem schneller aus, jedoch werden akzeptable mechanische Endeigenschaften oft erst nach mehreren Stunden bis Tagen erreicht.

Aufgabe der vorliegenden Erfindung war es daher, zweikomponentige Beschichtungsmittel zur Herstellung von Polyharnstoffbeschichtungen bereitzustellen, die ausreichend lange Topfzeiten aufweisen, um auch eine manuelle Zweikomponenten-Applikation zu ermöglichen und mit denen sich schnell trocknende, klare und möglichst farbhelle flexible Beschichtungen mit guten anwendungstechnischen Daten wie Elastizität und Härte herstellen lassen.

Gelöst wurde diese Aufgabe nun durch die Kombination spezieller Allophanatpolyisocyanate mit Polyasparaginsäureestern.

Gegenstand der Erfindung sind daher Zweikomponenten-Beschichtungssysteme, wenigstens enthaltend
A) eine Polyisocyantkomponente, bestehend aus
   a. einer Polyisocyanatkomponente auf Basis eines Allophanatgruppen aufweisenden aromatischen Prepolymers
   b. einer Polyisocyanatkomponente auf Basis eines (cyclo)aliphatischen Polyisocyanates
B) aminofunktionellen Polyasparaginsäureester der allgemeinen Formel (I) 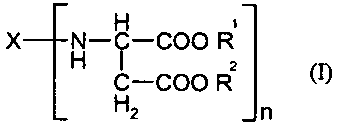 in der
   - X: für einen n-wertigen organischen Rest steht, der (formal) durch Entfernung der primären Aminogruppen eines n-wertigen Polyamins erhalten wird,
   - R¹, R²: für gleiche oder verschiedene organische Reste stehen, die unter den Reaktionsbedingungen gegenüber Isocyanatgruppen inert sind und
   - n: für eine ganze Zahl von mindestens 2 steht.

Die in Komponente A) eingesetzten Allophanate sind beispielsweise erhältlich, indem
a1) ein oder mehrere Polyisocyanate auf Basis Diphenylmethandiisocyanat mit
a2) einer oder mehreren Polyhydroxyverbindungen, wobei wenigstens eine ein Polyetherpolyol ist,
   zu einem NCO-funktionellen Polyurethanprepolymer umgesetzt werden und dessen so gebildete Urethangruppen dann anschließend unter Zugabe von
a3) Polyisocyanaten, welche verschieden von denen aus a1) sein können und
a4) Katalysatoren
a5) gegebenenfalls Stabilisatoren
teilweise oder vollständig allophanatisiert werden.

Beispiele für geeignete aromatische Polyisocyanate a1) sind 4,4'-Diphenylmethandiisocyanat, 2,4'-Diphenylmethandiisocyanat, sowie beliebige Mischungen aus 4,4'- und 2,4'-Diphenylmethandiisocyanat.

Bevorzugt werden in a1) Mischungen aus 4,4'- und 2,4'-Diphenylmethandiisocyanat mit einem Anteil an 2,4'-Diphenylmethandiisocyanat von mehr als 55%. Besonders bevorzugt werden Mischungen aus 4,4'- und 2,4'-Diphenylmethandiisocyanat mit einem Anteil an 2,4'-Diphenylmethandiisocyanat von mehr als 75% und ganz besonders bevorzugt wird nur 2,4'-Diphenylmethandiisocyanat in a1) verwendet.

Beispiele für geeignete Polyisocyanate in a3) sind die gleichen Polyisocyanate wie in a1) und darüber hinaus Polyisocyanate auf Basis von 1,4-Butandiisocyanat, 1,5-Pentandiisocyanat, 1,6-Hexandiisocyanat (Hexamethylendiisocyanat, HDI), 4-Isocyanatomethyl-1,8-octandiisocyanat (Triisocyanatononan, TIN) oder cyclische Systeme, wie 4,4'-Methylenbis(cyclohexylisocyanat), 3,5,5-Trimethyl-1-isocyanato-3-isocyanatomethylcyclohexan (Isophorondiisocyanat, IPDI) sowie ω.ω'-Diisocyanato-1,3-dimethylcyclohexan (H₆XDI) sowie 2,4- und /oder 2,6-Toluylendiisocyanat.

Bevorzugt werden in a1) und a3) Polyisocyanate des gleichen Typs eingesetzt.

Als Polyhydroxyverbindungen der Komponente a2) können alle dem Fachmann bekannten Polyhydroxyverbindungen eingesetzt werden, welche bevorzugt eine mittlere OH-Funktionalität von größer oder gleich 1,5 aufweisen, wobei wenigstens eine der in a2) enthaltenen Verbindungen ein Polyetherpolyol sein muss.

Geeignete in a2) einsetzbare Polyhydroxyverbindungen sind niedermolekulare Diole (z.B. 1,2-Ethandiol, 1,3- bzw. 1,2 Propandiol, 1,4-Butandiol), Triole (z.B. Glycerin, Trimethylolpropan) und Tetraole (z.B. Pentaerythrit), Polyetherpolyole, Polyesterpolyole, Polycarbonatpolyole sowie Polythioetherpolyole. Bevorzugt werden in a2) ausschließlich als Polyhydroxyverbindungen Substanzen der vorstehend genannten Art auf Polyetherbasis eingesetzt.

Bevorzugt weisen die in a2) eingesetzten Polyetherpolyole zahlenmittlere Molekulargewichte Mₙ von 300 bis 20.000 g/mol, besonders bevorzugt 1000 bis 12000 g/mol, ganz besonders bevorzugt 2.000 bis 6.000 g/mol auf.

Ferner besitzen sie bevorzugt eine mittlere OH-Funktionalität von ≥ 1,9, besonders bevorzugt ≥ 1,95. Ganz bevorzugt liegt die Funktionalität zwischen ≥1,95 und ≤2,50.

Solche Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich.

Besonders geeignete Polyetherpolyole der Komponente A2) sind solche der vorstehend genannten Art mit einem Gehalt an ungesättigten Endgruppen von kleiner oder gleich 0,02 Milliäquivalenten pro Gramm Polyol (meq/g), bevorzugt kleiner oder gleich 0,015 meq/g, besonders bevorzugt kleiner oder gleich 0,01 meq/g (Bestimmungsmethode ASTM D2849-69).

Derartige Polyetherpolyole sind in an sich bekannter Weise durch Alkoxylierung von geeigneten Starter-Molekülen, insbesondere unter Verwendung von Doppelmetallcyanid-Katalysatoren (DMC-Katalyse) herstellbar. Dies ist z.B. in der US-A 5 158 922 (z.B. Beispiel 30) und EP-A 0 654 302 (S. 5, Z. 26 bis S. 6, Z. 32) beschrieben.

Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können. Besonders bevorzugt sind Polyether mit einem Propylenoxidanteil von ≥75%. Ganz besonders bevorzugt sind Polyether auf Basis von Propylenoxid.

Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,2- und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehende beispielhafte genannten Art oder niedermolekulare Ethoxylierungs- oder Propoxylierungsprodukte derartiger einfacher Polyole oder beliebige Gemische derartiger modifizierter oder nicht modifizierter Alkohole.

Die Herstellung der isocyanatgruppenhaltigen Polyurethanprepolymere als Zwischenstufe erfolgt durch Umsetzung der Polyhydroxyverbindungen der Komponente a2) mit überschüssigen Mengen der Polyisocyanate aus a1). Die Umsetzung erfolgt im Allgemeinen bei Temperaturen von 20 bis 140°C, bevorzugt bei 40 bis 100°C, gegebenenfalls unter der Verwendung von aus der Polyurethanchemie an sich bekannten Katalysatoren wie beispielsweise Zinnverbindungen, z.B. Dibutylzinndilaurat, oder tertiären Aminen, z.B. Triethylamin oder Diazabicyclooctan.

Die Allophanatisierung erfolgt dann anschließend durch Umsetzung der isocyanatgruppenhaltigen Polyurethanprepolymere mit Polyisocyanaten a3), welche gleich oder verschieden zu denen der Komponente a1) sein können, wobei geeignete Katalysatoren a4) zur Allophanatisierung zugesetzt werden. Gegebenenfalls werden anschließend zur Stabilisierung saure Additive der Komponente a5) zugesetzt und gegebenenfalls überschüssiges Polyisocyanat, z.B. durch Dünnschichtdestillation oder Extraktion aus dem Produkt entfernt.

Das Molverhältnis der OH-Gruppen der Verbindungen der Komponente a2) zu den NCO-Gruppen der Polyisocyanate aus a1) und a3) beträgt bevorzugt 1 : 1,5 bis 1 : 20, besonders bevorzugt 1 : 2 bis 1 : 15, ganz besonders bevorzugt 1 : 2 bis 1 : 10.

Bevorzugt werden in a4) als Katalysatoren Zink(II)-Verbindungen eingesetzt, wobei dies besonders bevorzugt Zink-Seifen längerkettiger, verzweigter oder unverzweigter, aliphatischer Carbonsäuren sind. Bevorzugte Zink(II)-Seifen sind solche auf Basis von 2-Ethylhexansäure sowie den linearen, aliphatischen C₄- bis C₃₀-Carbonsäuren. Ganz besonders bevorzugte Verbindungen der Komponente a4) sind Zn(II)bis(2-ethylhexanoat), Zn(II)bis(n-oktoat), Zn(II)bis(stearat), Zn(II)-acetylacetonat oder deren Mischungen.

Diese Allophanatisierungskatalysatoren werden typischerweise in Mengen von 5 ppm bis zu 5 Gew.-%, bezogen auf die gesamte Reaktionsmischung, eingesetzt. Bevorzugt werden 5 bis 5000 ppm des Katalysators, besonders bevorzugt 20 bis 2000 ppm, eingesetzt.

Gegebenenfalls können vor, während oder nach der Allophanatisierung auch stabilisierend wirkende Zusätze verwendet werden. Dies können saure Additive wie Lewis-Säuren (Elektronenmangelverbindungen) oder Broenstedt-Säuren (Protonensäuren) oder solche Verbindungen sein, welche unter Reaktion mit Wasser derartige Säuren freisetzen.

Dies können beispielsweise anorganische oder organische Säuren oder auch neutrale Verbindungen wie Säurehalogenide oder Ester sein, welche mit Wasser zu den entsprechenden Säuren reagieren. Genannt seien hier insbesondere Salzsäure, Phosphorsäure, Phosphorsäureester, Benzoylchlorid, Isophtalsäuredichlorid, p-Toluolsulfonsäure, Ameisensäure, Essigsäure, Dichloressigsäure und 2-Chlorpropionsäure.

Die vorgenannten sauren Additive können auch zur Deaktivierung des Allophanatisierungskatalysators eingesetzt werden. Sie verbessern darüber hinaus die Stabilität der erfindungsgemäß hergestellten Allophanate, z.B. bei thermischer Belastung während der Dünnschichtdestillation oder auch nach der Herstellung bei Lagerung der Produkte.

Die sauren Additive werden in der Regel mindestens in einer solchen Menge zugegeben, dass das Molverhältnis der sauren Zentren des sauren Additivs und des Katalysators mindestens 1:1 beträgt. Vorzugsweise wird jedoch ein Überschuss des sauren Additivs zugesetzt.

Sofern überhaupt saure Additive verwendet werden, sind dies bevorzugt organische Säuren wie Carbonsäuren oder Säurehalogenide, wie Benzoylchlorid oder Isophtalyldichlorid.

Soll überschüssiges Diisocyanat abgetrennt werden, ist die Dünnschichtdestillation das bevorzugte Verfahren und wird in der Regel bei Temperaturen von 100 bis 160 °C und einem Druck von 0,01 bis 3 mbar durchgeführt. Der Restmonomergehalt beträgt danach bevorzugt weniger als 1 Gew.-%, besonders bevorzugt weniger als 0,5 Gew.% (Diisocyanat).

Die gesamten Verfahrensschritte können gegebenenfalls in Anwesenheit inerter Lösungsmittel durchgeführt werden. Als inerte Lösungsmittel sind dabei solche zu verstehen, die unter den gegebenen Reaktionsbedingungen nicht mit den Edukten reagieren. Beispiele sind Ethylacetat, Butylacetat, Methoxypropylacetat, Methylethylketon, Methylisobutylketon, Toluol, Xylol, aromatische oder (cyclo)aliphatische Kohlenwasserstoffgemische oder beliebige Gemische derartiger Lösungsmittel. Bevorzugt werden die erfindungsgemäßen Umsetzungen jedoch lösemittelfrei durchgeführt.

Die Zugabe der beteiligten Komponenten kann sowohl bei der Herstellung der isocyanatgruppenhaltigen Prepolymere als auch bei Allophanatisierung in beliebiger Reihenfolge erfolgen. Bevorzugt ist jedoch die Zugabe des Polyetherpolyols a2) zum vorgelegten Polyisocyanat der Komponenten a1) und a3) und schließlich die Zugabe des Allophanatisierungskatalysators a4).

Bei der Polyisocyanatkomponente b) handelt es sich um aliphatische und/oder cycloaliphatische Polyisocyanate auf Basis von Di- oder Triisocyanaten wie Butandiisocyanat, Pentandiisocyanat, Hexandiisocyanat (Hexamethylendiisocyanat, HDI), 4-Isocyanatomethyl-1,8-octandiisocyanat (Triisocyanatononan, TIN) oder cyclische Systeme, wie 4,4'-Methylenbis(cyclohexylisocyanat), 3,5,5-Trimethyl-1-isocyanato-3-isocyanatomethylcyclohexan (Isophorondiisocyanat, IPDI) sowie ω.ω'-Diisocyanato-1,3-dimethylcyclohexan (H₆XDI).

Bevorzugt werden in der Polyisocyanatkomponente b) Polyisocyanate auf Basis Hexandiisocyanat (Hexamethylendiisocyanat, HDI), 4,4'-Methylenbis(cyclohexylisocyanat) und/oder 3,5,5-Trimethyl-1-isocyanato-3-isocyanatomethylcyclohexan (Isophorondiisocyanat, IPDI) eingesetzt. Ganz besonders bevorzugte Polyisocyanate der Komponente b) sind solche auf Basis von HDI.

Als Polyisocyanate für b) kommen marktübliche Polyisocyanate, das heißt vor allem die bekannten Urethangruppen, Uretdiongruppen, Allophanatgruppen, Biuretgruppen, Isocyanuratgruppen und Iminooxadiazindiongruppen aufweisenden Modifizierungsprodukte der oben genannten einfachen Diisocyanate in Betracht.

Zu den Urethangruppen aufweisenden Polyisocyanaten gehören z. B. die Umsetzungsprodukte von 1-Methyl-2,4- und gegebenenfalls 1-Methyl-2,6-diisocyanatocyclohexan mit unterschüssigen Mengen an Trimethylolpropan, bzw. dessen Gemischen mit einfachen Diolen, wie z. B. den isomeren Propan- oder Butandiolen. Die Herstellung derartiger, Urethangruppen aufweisender Polyisocyanate in praktisch monomerfreier Form ist beispielsweise in der DE-A 1 090 196 beschrieben.

Zu den Biuretgruppen aufweisenden Polyisocyanaten gehören insbesondere jene auf Basis von 1,6-Diisocyanatohexan, deren Herstellung beispielsweise in EP-A 0 003 505, DE-A 1 101 394, US-A 3 358 010 oder US-A 3 903 127 beschrieben ist.

Zu den Isocyanuratgruppen aufweisenden Polyisocyanaten gehören insbesondere die Trimerisate bzw. Mischtrimerisate der oben beispielhaft genannten Diisocyanate, wie z. B. die aliphatischen bzw. die aliphatisch-cycloaliphatischen Trimerisate bzw. Mischtrimerisate auf Basis von 1,6-Diisocyanatohexan und/oder Isophorondiisocyanat, die beispielsweise gemäß US-A 4 324 879, US-A 4 288 586, DE-A 3 100 262, DE-A 3 100 263, DE-A 3 033 860 oder DE-A 3 144 672 erhältlich sind.

Zu den Iminooxadiazindiongruppen aufweisenden Polyisocyanaten gehören insbesondere die Trimerisate bzw. Mischtrimerisate der oben beispielhaft genannten Diisocyanate, wie z. B. die aliphatischen Trimerisate auf Basis von 1,6-Diisocyanatohexan, die beispielsweise gemäß EP-A 0 962 455, EP-A 0 962 454 oder EP-A 0 896 009 zugänglich sind.

Die erfindungsgemäß zum Einsatz gelangenden Polyisocyanate weisen im allgemeinen einen Isocyanatgehalt von 5 bis 25 Gew.-%, eine mittlere NCO-Funktionalität von 2,0 bis 5,0, vorzugsweise 2,8 bis 4,0 und einen Restgehalt an, zu ihrer Herstellung eingesetzten, monomeren Diisocyanaten von unter 2 Gew.-%, vorzugsweise unter 0,5 Gew.-% auf. Selbstverständlich können auch beliebige Gemische der beispielhaft genannten Polyisocyanate zum Einsatz gelangen.

In einer bevorzugten Ausführungsform der Erfindung werden die Polyisocyanate der Komponenten a1) und a3) in einem geeigneten Reaktionsgefäß vorgelegt und, gegebenenfalls unter Rühren, auf 40 bis 100°C erwärmt. Nach Erreichen der gewünschten Temperatur werden unter Rühren dann die Polyhydroxyverbindungen der Komponente a2) zugegeben und solange gerührt, bis der theoretische NCO-Gehalt des nach der gewählten Stöchiometrie zu erwartenden Polyurethanprepolymers erreicht oder geringfügig unterschritten ist. Jetzt wird der Allophanatisierungskatalysator a4) zugegeben und die Reaktionsmischung solange auf 50 und 100°C erwärmt, bis der gewünschte NCO-Gehalt erreicht oder geringfügig unterschritten ist. Nach Zugabe von sauren Additiven als Stabilisatoren wird das Reaktionsgemisch abgekühlt oder direkt der Dünnschichtdestillation zugeführt. Dabei wird das überschüssige Polyisocyanat bei Temperaturen von 100 bis 160°C und einem Druck von 0,01 bis 3 mbar bis auf einen Restmonomergehalt von weniger als 1 %, bevorzugt weniger als 0,5 %, abgetrennt. Nach der Dünnschichtdestillation kann gegebenenfalls weiterer Stabilisator zugegeben werden. Anschließend wird das erhaltene Polyisocyanat a) mit der Polyisocyanatkomponente b) abgemischt.

In einer weiteren besonderen Ausführungsform der Erfindung werden die Polyisocyanate der Komponenten a1) und a3) in einem geeigneten Reaktionsgefäß vorgelegt und, gegebenenfalls unter Rühren, auf 40 bis 100°C erwärmt. Nach Erreichen der gewünschten Temperatur werden unter Rühren dann die Polyhydroxyverbindungen der Komponente a2) zugegeben und solange gerührt, bis der theoretische NCO-Gehalt des nach der gewählten Stöchiometrie zu erwartenden Polyurethanprepolymers erreicht oder geringfügig unterschritten ist. Jetzt werden der Allophanatisierungskatalysator a4) und die Polyisocyanatkomponente b) zugegeben und die Reaktionsmischung solange auf 50 und 100°C erwärmt, bis der gewünschte NCO-Gehalt erreicht oder geringfügig unterschritten ist. Nach Zugabe von sauren Additiven als Stabilisatoren wird das Reaktionsgemisch abgekühlt oder direkt der Dünnschichtdestillation wie oben beschrieben zugeführt.

Solche in den beanspruchten Zweikomponenten-Beschichtungssystemen eingesetzte Allophanate
a) entsprechen typischerweise der allgemeinen Formel (II), 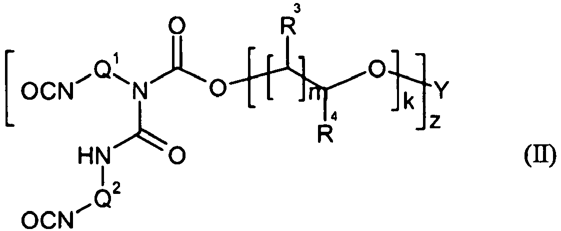 worin
   - Q¹ und Q²: unabhängig voneinander der Rest eines aromatischen Diphenylmethandiisocyanatisomeren der genannten Art ist,
   - R³ und R⁴: unabhängig voneinander Wasserstoff oder ein C₁-C₄-Alkylrest sind, wobei R³ und R⁴ bevorzugt Wasserstoff und/oder Methylgruppen sind und in jeder Wiederholungseinheit k die Bedeutung von R³ und R⁴ verschieden sein kann,
   - Y: der Rest eines Starter-Moleküls der genannten Art mit einer Funktionalität von 2 bis 6 ist, und somit
   - z: eine Zahl von 2 bis 6 ist, welche durch Verwendung von verschiedenen Starter-Molekülen selbstverständlich auch keine ganze Zahl sein muss, sowie
   - k: bevorzugt so vielen Monomereinheiten entspricht, dass das zahlenmittlere Molekulargewicht des der Struktur zugrunde liegenden Polyethers 300 bis 20.000 g/mol beträgt und
   - m: 1 oder 3 ist.

Vorzugsweise werden Allophanate a) erhalten, welche der allgemeinen Formel (III) entsprechen, 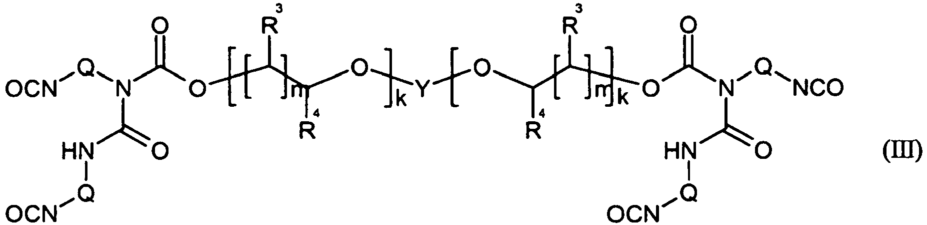 worin
- Q: für den Rest eines aromatischen Diphenylmethandiisocyanatisomeren der genannten Art steht,
- R³ und R⁴: unabhängig voneinander für Wasserstoff oder für einen C₁-C₄-Alkylrest stehen, wobei R³ und R⁴ bevorzugt Wasserstoff und/oder Methylgruppen sind wobei in jeder Wiederholungseinheit m die Bedeutung von R³ und R⁴ verschieden sein kann,
- Y: für den Rest eines difunktionellen Starter-Moleküls der genannten Art steht und
- k: so vielen Monomereinheiten entspricht, dass das zahlenmittlere Molekulargewicht des der Struktur zugrunde liegenden Polyethers 300 bis 20.000 g/mol beträgt und
- m: gleich 1 oder 3 ist.

Da zur Herstellung der Allophanate der Formel (II) und (III) in der Regel Polyole auf Basis von polymerisiertem Ethylenoxid, Propylenoxid oder Tetrahydrofuran eingesetzt werden, ist in den Formeln (II) und (III) im Falle von m = 1 besonders bevorzugt wenigstens ein Rest von R³ und R⁴ Wasserstoff, im Falle von m = 3 sind R³ und R⁴ Wasserstoff.

Die erfindungsgemäß in A) eingesetzten Allophanate a) haben typischerweise zahlenmittlere Molekulargewichte von 1181 bis 50.000 g/mol, bevorzugt 1.300 bis 10.000 g/mol und besonders bevorzugt 2.000 bis 6.000 g/mol.

Die erfindungsgemäß in A) eingesetzten Polyisocyanatgemische aus den Allophanaten a) und den (cyclo)aliphatischen Polyisocyanaten b) haben typischerweise Viskositäten bei 23°C von 500 bis 100.000 mPas, bevorzugt 500 bis 50.000 mPas und besonders bevorzugt von 750 bis 20.000 mPas, ganz besonders bevorzugt von 1.000 bis 10.000 mPas.

Als Kombinations- und Reaktionspartner für die Polyisocyanatgemische A) kommen aminofunktionelle Asparaginsäureester B) zum Einsatz.

Die Gruppe X in Formel (I) der Polyasparaginsäureester der Komponente B) basiert bevorzugt auf einem n-wertigen Polyamin ausgewählt aus der Gruppe bestehend aus Ethylendiamin, 1,2-Diaminopropan, 1,4-Diaminobutan, 1,6-Diaminohexan, 2,5-Diamino-2,5-dimethylhexan, 2,2,4- und/- oder 2,4,4-Trimethyl-1,6-diaminohexan, 1,11-Diaminoundecan, 1,12-Diaminododecan, 1-Amino-3,3,5-trimethyl-5-aminomethyl-cyclohexan, 2,4-und/oder 2,6-Hexahydrotoluylendiamin, 2,4'-und/oder 4,4'-Diamino-dicyclohexylmethan, 3,3'-Dimethyl-4,4'-diamino-dicyclohexylmethan, 2,4,4'-Triamino-5-methyl-dicyclohexylmethan, und Polyetherpolyaminen mit aliphatisch gebundenen primären Aminogruppen mit einem zahlenmittleren Molekulargewicht Mₙ von 148 bis 6000 g/mol.

Besonders bevorzugt basiert die Gruppe X auf 1,4-Diaminobutan, 1,6-Diaminohexan, 2,2,4-und/oder 2,4,4-Trimethyl-1,6-diaminohexan, 1-Amino-3,3,5-trimethyl-5-aminomethyl-cyclohexan, 4,4'-Diamino-dicyclohexylmethan oder 3,3'-Dimethyl-4,4'-diamino-dicyclohexylmethan.

In Bezug auf die Reste R¹ und R² bedeutet "unter den Reaktionsbedingungen gegenüber Isocyanatgruppen inert", dass diese Reste keine Gruppen mit Zerewitinoff-aktivem Wasserstoff (CHacide Verbindungen; vgl. Römpp Chemie Lexikon, Georg Thieme Verlag Stuttgart) wie OH, NH oder SH aufweisen.

Bevorzugt sind R¹ und R² unabhängig voneinander C₁ bis C₁₀-Alkylreste, besonders bevorzugt Methyl oder Ethylreste.

Für den Fall, dass X auf 2,4,4'-Triamino-5-methyl-dicyclohexylmethan basiert, sind bevorzugt R¹ = R² = Ethyl.

Bevorzugt ist n in Formel (I) eine ganze Zahl von 2 bis 6, besonders bevorzugt 2 bis 4.

Die Herstellung der aminofunktionellen Polyasparaginsäureester B) erfolgt in an sich bekannter Weise durch Umsetzung der entsprechenden primären Polyamine der Formel

X-[NH₂]ₙ

mit Malein- oder Fumarsäureestern der allgemeinen Formel

R¹OOC-CH=CH-COOR²

Geeignete Polyamine sind die oben als Basis für die Gruppe X genannten Diamine.

Beispiele geeigneter Malein- oder Fumarsäureester sind Maleinsäuredimethylester, Maleinsäurediethylester, Maleinsäuredibutylester und die entsprechenden Fumarsäureester.

Die Herstellung der aminofunktionellen Polyasparaginsäureester B) aus den genannten Ausgangsmaterialien erfolgt bevorzugt innerhalb des Temperaturbereichs von 0 bis 100°C, wobei die Ausgangsmaterialien in solchen Mengenverhältnissen eingesetzt werden, dass auf jede primäre Aminogruppe mindestens eine, vorzugsweise genau eine olefinische Doppelbindung entfällt, wobei im Anschluss an die Umsetzung gegebenenfalls im Überschuss eingesetzte Ausgangsmaterialien destillativ abgetrennt werden können. Die Umsetzung kann in Substanz oder in Gegenwart geeigneter Lösungsmittel wie Methanol, Ethanol, Propanol oder Dioxan oder Gemischen derartiger Lösungsmittel erfolgen.

In den erfindungsgemäßen Zweikomponenten-Beschichtungssystemen können sowohl einzelne aminofunktionelle Asparaginsäureester B) als auch Mischungen von mehreren aminofunktionellen Asparaginsäureestern eingesetzt werden. Darüber hinaus können weitere aminofunktionelle Verbindungen, wie z. B. Polyetherpolyaminen mit 2 bis 4, vorzugsweise 2 bis 3 und besonders bevorzugt 2 aliphatisch gebundenen primären Aminogruppen und einem zahlenmittleren Molekulargewicht Mₙ von 148 bis 12200, vorzugsweise 148 bis 8200, besonders bevorzugt 148 bis 4000 und ganz besonders bevorzugt 148 bis 2000 g/mol. Weitere geeignete aminofunktionelle Verbindungen als Vernetzer B) sind niedermolekulare aliphatische und oder cycloaliphatische Di- und Triamine, wie z. B. Ethylendiamin, 1,2-Diaminopropan, 1,4-Diaminobutan, 1,6-Diaminohexan, 2,5-Diamino-2,5-dimethylhexan, 2,2,4- und/oder 2,4,4-Trimethyl-1,6-diaminohexan, 1,11-Diaminoundecan, 1,12-Diaminododecan, 1-Amino-3,3,5-trimethyl-5-aminomethyl-cyclohexan, 2,4-und/oder 2,6-Hexahydrotoluylendiamin, 2,4'-und/oder 4,4'-Diamino-dicyclohexylmethan, 3,3'-Dimethyl-4,4'-diamino-dicyclohexylmethan, 2,4,4'-Triamino-5-methyl-dicyclohexylmethan, Polyclear 136^{®} (modifiziertes IPDA, BASF AG, Ludwigshafen), aromatische Di- und Triamine mit wenigstens einem Alkylsubstituent mit 1 bis 3 Kohlenstoffatomen am aromatischen Ring, wie z. B. 2,4-Toluylendiamin, 2,6-Toluylendiamin, 1-Methyl-3,5-diethyl-2,4-diaminobenzol, 1,3-Diethyl,2,4-diaminobenzol, 1-Methyl-3,5-diethyl-2,6-diaminobenzol, 1,3,5-Triethyl-2,6-diaminobenzol, 3,5,3',5'-tetraethyl-4,4'-diaminodiphenylmethan, 3,3'-Dimethyl-4,4'-diaminodiphenylmethan, 1-Ethyl-2,4-diaminobenzol, 1-Ethyl-2,6-diaminobenzol, 2,6-Diethylnaphthylen-1,5-diamin, sowie gegebenenfalls blockierte Polyamine, wie z. B. Ketimine oder Aldimine bis zu einer Menge von 50 Gew.-%, bezogen auf den Anteil an Asparaginsäureester in der Komponente B) mit verwendet werden, wodurch die Härte der Beschichtung erhöht werden kann. Das Verhältnis von freien und/oder blockierten Aminogruppen zu freien NCO-Gruppen beträgt in den erfindungsgemäßen Zweikomponenten-Beschichtungssystemen bevorzugt 0,5 : 1 bis 1,5 : 1, besonders bevorzugt 1:1 bis 1,5:1.

Zur Herstellung der erfindungsgemäßen Zweikomponenten-Beschichtungssystemen werden die Einzelkomponenten miteinander vermischt.

Die genannten Beschichtungsmittel können mit den an sich bekannten Techniken wie Sprühen, Tauchen, Fluten, Rollen, Streichen oder Gießen auf Oberflächen appliziert werden. Nach dem Ablüften gegebenenfalls vorhandener Lösungsmittel, härten die Beschichtungen dann bei Umgebungsbedingungen oder auch bei höheren Temperaturen von beispielsweise 40 bis 200°C.

Die genannten Beschichtungsmittel können beispielsweise auf Metalle, Kunststoffe, Keramik, Glas sowie Naturstoffe aufgebracht werden, wobei die genannten Substrate zuvor einer gegebenenfalls notwendigen Vorbehandlung unterzogen worden sein können.

### Beispiele:

Die Bestimmung der NCO-Gehalte erfolgte durch Rücktitration von im Überschuss zugesetztem Di-n-butylamin mit Salzsäure. Die Viskositäten wurden mit einem Rotationsviskosimeter (Typ MCR 51) der Firma Anton Paar bei 23°C bestimmt.

Verwendete aliphatische Polyisocyanate:
Desmodur N 3400^{®}: Aliphatisches Polyisocyanat der Bayer MaterialScience AG auf Basis Hexamethylendiisocyanat mit einem NCO-Gehalt von 21,8 Gew.-%.
Desmodur N 3600^{®}: Aliphatisches Polyisocyanat der Bayer MaterialScience AG auf Basis Hexamethylendiisocyanat mit einem NCO-Gehalt von 23,0 Gew.-%.
Desmodur XP 2580^{®}: Aliphatisches Polyisocyanat der Bayer MaterialScience AG auf Basis Hexamethylendiisocyanat mit einem NCO-Gehalt von 20,0 Gew.-%.
Desmodur XP 2410^{®}: Aliphatisches Polyisocyanat der Bayer MaterialScience AG auf Basis Hexamethylendiisocyanat mit einem NCO-Gehalt von 21,5 Gew.-%.
Soweit nicht anders angegeben, beziehen sich alle Prozentangaben auf das Gewicht.

### Herstellung Polyisocyanat A1)

In einem 5 Liter Reaktionskessel wurden zu 728,7 g 2,4'-Diphenylmethandiisocyanat unter Stickstoffatmosphäre 0,35 g Dibutylzinn(II)dilaurat (DBTL) gegeben, danach wurde die Mischung unter Rühren auf 80°C erwärmt. Nun wurden innerhalb von 2 Stunden 1458,5 g eines Polypropylenglycols zudosiert, welcher mittels DMC-Katalyse (Basen-frei) hergestellt worden war (Gehalt ungesättigter Gruppen < 0,01 meq/g, Molgewicht 2000 g/mol, OH-Zahl 56, theoretische Funktionalität 2). Die Reaktionsmischung wurde danach so lange auf 80°C erwärmt, bis ein NCO-Gehalt von ca. 8,4 % erreicht war. Nun wurde die Temperatur auf 100°C erhöht und die Reaktionsmischung nach Zugabe von 1,05 Zink(II)acetylacetonat solange gerührt, bis der NCO-Gehalt bei ca. 5,6 % lag oder konstant war. Danach wurde auf 50 °C abgekühlt und 1312,5 g Desmodur N 3400 über einen Tropftrichter zudosiert. Es wurde noch 30 Minuten bei 50 °C gerührt, danach auf 30° C abgekühlt und das erhaltene Produkt über einen Filter in ein entsprechendes Gebinde unter Stickstoffbeschleierung abfiltriert.

Es wurde ein klares Produkt mit einem NCO-Gehalt von 12,9 % und einer Viskosität von 2370 mPas (23°C) erhalten.

### Herstellung Polyisocyanat A2)

Es wurde nach der gleichen Vorschrift wie bei Polyisocyanat A1) gearbeitet, jedoch wurde anstelle von Desmodur N 3400, Desmodur XP 2580 verwendet.

Es wurde ein klares Produkt mit einem NCO-Gehalt von 11,9 % und einer Viskosität von 3770 mPas (23°C) erhalten.

### Herstellung Polyisocyanat A3)

Es wurde nach der gleichen Vorschrift wie bei Polyisocyanat A1) gearbeitet, jedoch wurde anstelle von Desmodur^{®} N 3400, Desmodur^{®} XP 2410 verwendet.

Es wurde ein klares Produkt mit einem NCO-Gehalt von 12,9 % und einer Viskosität von 4620 mPas (23°C) erhalten.

### Herstellung Polyisocyanat A4)

Es wurde nach der gleichen Vorschrift wie bei Polyisocyanat A1) gearbeitet, jedoch wurde anstelle von Desmodur^{®} N 3400, Desmodur^{®} N 3600 verwendet.

Es wurde ein klares Produkt mit einem NCO-Gehalt von 12,7 % und einer Viskosität von 13600 mPas (23°C) erhalten.

### Herstellung Polyisocyanat A5)

Es wurde nach der gleichen Vorschrift wie bei Polyisocyanat A3) gearbeitet, jedoch wurde Desmodur^{®} XP 2410 bereits mit dem Zink(II)acetylacetonat zugegeben und die Allophanatisierungsreaktion in Gegenwart von Desmodur^{®} XP 2410 durchgeführt.

Es wurde ein klares Produkt mit einem NCO-Gehalt von 10,8 % und einer Viskosität von 9590 mPas (23°C) erhalten.

### Herstellung Polyasparaginsäureester B1)

344 g (2 mol) Maleinsäurediethylester wurden bei 50°C unter Rühren zu 210 g (2 Äq.) 4,4'-Diaminodicyclohexylmethan getropft. Nach vollständiger Zugabe ließ man 90 h bei 60°C unter N₂-Atmosphäre nachrühren und entwässerte während der letzten beiden Stunden bei 1 mbar. Es wurde ein flüssiges Produkt mit einem Äquivalentgewicht von 277 g erhalten.

### Herstellung Polyasparaginsäureester B2)

344 g (2 mol) Maleinsäurediethylester wurden bei 50°C unter Rühren zu 238 g (2 Äq.) 3,3'-Dimethyl-4,4'-diaminodicyclohexylmethan getropft. Nach vollständiger Zugabe ließ man 90 h bei 60°C unter N₂-Atmosphäre nachrühren und entwässerte während der letzten beiden Stunden bei 1 mbar. Es wurde ein flüssiges Produkt mit einem Äquivalentgewicht von 291 g erhalten.

### Herstellung Polyasparaginsäureester B3)

344 g (2 mol) Maleinsäurediethylester wurden bei 50°C unter Rühren zu 116 g (2 Äq.) 2-Methylpentanmethylendiamin-1,5 getropft. Nach vollständiger Zugabe ließ man 90 h bei 60°C unter N₂-Atmosphäre nachrühren und entwässerte während der letzten beiden Stunden bei 1 mbar. Es wurde ein flüssiges Produkt mit einem Äquivalentgewicht von 234 g erhalten.

### Herstellung eines aliphatischen, allophanatgruppenhalten Prepolymers (Vergleich)

Zu 2520,7 g 1,6-Hexandiisocyanat wurden zunächst 90 mg Isophtalsäuredichlorid gegeben, danach wurde die Mischung unter Rühren auf 100°C erwärmt. Nun wurden innerhalb von 3 Stunden 1978,5 g eines Polypropylenglycols zugegeben, welcher mittels DMC-Katalyse (Basen-frei) hergestellt worden war (Gehalt ungesättigter Gruppen < 0,01 meq/g, Molgewicht 2000 g/mol, OH-Zahl 56, theoretische Funktionalität 2). Die Reaktionsmischung wurde danach solange auf 100°C erwärmt, bis ein NCO-Gehalt von 26,1 % erreicht war. Nun wurde die Temperatur auf 90°C vermindert und die Reaktionsmischung nach Zugabe von 360 mg Zink(II)bis(2-ethylhexanoat) solange gerührt, bis der NCO-Gehalt bei 24,3 % lag. Nach Zugabe von 360 mg Isophtalsäuredichlorid wurde das überschüssige 1,6-Hexandiisocyanat bei 0,5 mbar und 140°C mittels Dünnschichtdestillation entfernt.

Es wurde ein klares, farbloses Produkt mit einem NCO-Gehalt von 5,9 %, einer Viskosität von 2070 mPas (23°C) und einem Restgehalt an freiem HDI von < 0,03 % erhalten.

### Herstellung von Beschichtungen

Die Polyisocyanate A1) und A2) wurden bei Raumtemperatur mit den aminofunktionellen Polyasparaginsäureestem B2), B3) bzw. Mischungen aus B2) und B3) gemischt, wobei ein NCO/NH Verhältnis von 1,1 : 1 eingehalten wurde. Mit einem 150 µm Rakel wurden danach entsprechende Filme auf eine Glasplatte aufgetragen. Die Zusammensetzung und Eigenschaften der Beschichtungen sind in der Tabelle 1 zusammengefasst.

**Tabelle 1: Beispiele 1 bis 5 - Zusammensetzungen und Eigenschaften der Filme**

| **Beispiele** | **1** | **2** | **3** | **4** | **Vergleich** |
|---|---|---|---|---|---|
| Polyasparaginsäureester B2 [g] | 100,0 | - | 50,0 | 50,0 | 100,0 |
| Polyasparaginsäureester B3 [g] | - | 100,0 | 50,0 | 50,0 | |
| Polyisocyanat A1) [g] | 153,0 | | 140,5 | - | |
| Polyisocyanat A2) [g] | - | 165,9 | - | 152,3 | |
| Allophanathaltiges Prepolymer [g] | | | | | 280,7 |
| NH:NCO | 1:1,1 | 1:1,1 | 1:1,1 | 1:1,1 | 1:1,1 |

| **Topfzeit** | 2 min | 2 min | 3,5 min | 4 min | 24 min |
|---|---|---|---|---|---|
| **Pendelhärte:** (150µm Nassfilm) nach 7d | 42" | 40" | 59" | 53" | 32" |
| **Shore-Härte D: DIN 53505** nach 7d | 33 | 37 | 55 | 52 | 27 |
| **Zugfestigkeit ISO EN 527:** | | | | | |
| Bruchspannung: (MPa) | 7,8 | 8,1 | 10,0 | 8,7 | 2,4 |
| Std.-Abw. | 0,3 | 0, 1 | 0,1 | 0,2 | 0,3 |
| nominelle Bruchdehnung: (%) | 248 | 205 | 65 | 129 | 52 |
| Std.-Abw. | 6,5 | 5,2 | 3,7 | 4,8 | 4,5 |

Die Polyisocyanatmischungen A1) und A2) basieren auf den prinzipiell gleichen Bausteinen., mit dem Unterschied, dass die aliphatische Polyisocyanatkomponente b) variiert. Aufgrund ihrer guten Verträglichkeit, hohen Funktionalität und guten flexibilisierenden Eigenschaften wurden innerhalb von 2 h nicht-klebrige, flexible, zähe und klare Filme erhalten, die sehr gute mechanische Eigenschaften, wie hohe Zugfestigkeit und hohe Bruchdehnung, aufwiesen. Mit dem rein aliphatischen Allophanat hingegen, erfolgte zwar eine relativ rasche Aushärtung, aber es wurden erst nach 24 h Filme erhalten, die ein brauchbares mechanisches Eigenschaftsniveau aufwiesen, allerdings bezüglich der mechanischen Werte deutlich unter denen der erfindungsgemäßen Bindemittelkombinationen lagen.

## Patentansprüche

1. Zweikomponenten-Beschichtungssysteme, wenigstens enthaltend
A) eine Polyisocyanatkomponente, bestehend aus
a. einer Polyisocyanatkomponenten auf Basis eines Allophanatgruppen aufweisenden aromatischen Prepolymers
b. einer Polyisocyanatkomponenten auf Basis eines (cyclo)aliphatischen Polyisocyanates
B) aminofunktionellen Polyasparaginsäureester der allgemeinen Formel (I) 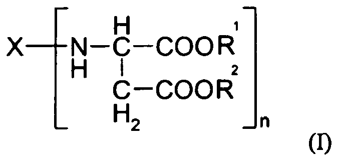 in der
X für einen n-wertigen organischen Rest steht, der durch Entfernung der primären Aminogruppen eines n-wertigen Polyamins erhalten wird,
R¹, R² für gleiche oder verschiedene organische Reste stehen, die unter den Reaktionsbedingungen gegenüber Isocyanatgruppen inert sind und
n für eine ganze Zahl von mindestens 2 steht,
wobei bis zu 50 Gew.-% der aminofunktionellen Polyasparaginsäureester der allgemeinen Formel (I) durch aminofunktionelle Polyether, kurzkettige Diamine und/oder gegebenenfalls blockierte Polyamine ersetzt werden können.

2. Zweikomponenten-Beschichtungssysteme gemäß Anspruch 1, **dadurch gekennzeichnet, dass** die in A) eingesetzten aromatischen Allophanate hergestellt werden, indem
A1) ein oder mehrere Diphenylmethandiisocyanatisomeren
A2) einer oder mehreren Polyhydroxyverbindungen, wobei wenigstens eine ein Polyetherpolyol ist,
zu einem NCO-funktionellen Polyurethan-Prepolymer umgesetzt werden und dessen so gebildete Urethangruppen dann anschließend unter Zugabe von
A3) Polyisocyanaten, welche verschieden von denen aus A1) sein können und
A4) Katalysatoren und
A5) gegebenenfalls Stabilisatoren
teilweise oder vollständig allophanatisiert werden und diese aromatischen Allophanate danach mit der Polyisocyanatkomponente b) vermischt wird.

3. Zweikomponenten-Beschichtungssysteme gemäß Anspruch 2, **dadurch gekennzeichnet, dass** bei der Herstellung der in A) eingesetzten Allophanate in den Komponenten A1) und A3) Gemische aus 4,4'-Diphenylmethandiisocyanat und 2,4'-Diphenylmethandiisocynat eingesetzt werden.

4. Zweikomponenten-Beschichtungssysteme gemäß Anspruch 2 oder 3, **dadurch gekennzeichnet, dass** in A1) und A3) 2,4'-Diphenylmethandiisocyanat eingesetzt wird.

5. Zweikomponenten-Beschichtungssysteme gemäß einem der Ansprüche 2 bis 4, **dadurch gekennzeichnet, dass** zur Allophanatisierung in A4) als Katalysatoren Zink(II)-Verbindungen eingesetzt werden.

6. Zweikomponenten-Beschichtungssysteme gemäß Anspruch 5, **dadurch gekennzeichnet, dass** als Zink(II)-Verbindungen Zink(II)bis(2-ethylhexanoat), Zinkacetylacetonat, Zn(II)-bis(n-oktoat), Zn(II)bis(stearat), oder deren Mischungen verwendet werden.

7. Zweikomponenten-Beschichtungssysteme gemäß einem der Ansprüche 2 bis 6, **dadurch gekennzeichnet, dass** in A2) ausschließlich Polyetherpolyole eingesetzt werden, wobei diese zahlenmittlere Molekulargewichte Mₙ von 2.000 bis 6.000 g/mol, eine mittlere OH-Funktionalität von ≥ 1,95 und einen Grad an ungesättigten Endgruppen von kleiner oder gleich 0,01 meq/g nach ASTM D2849-69 aufweisen.

8. Zweikomponenten-Beschichtungssysteme gemäß den Ansprüchen 1 bis 6, **dadurch gekennzeichnet, dass** als Polyisocyanatkomponente b) Polyisocyanate auf Basis von Hexamethylendiisocyanat eingesetzt werden.

9. Zweikomponenten-Beschichtungssysteme gemäß einem der Ansprüche 2 bis 8, **dadurch gekennzeichnet, dass** das Molverhältnis der OH-Gruppen der Verbindungen der Komponente A2) zu den NCO-Gruppen der Polyisocyanate aus A1) und A3) 1 : 2 bis 1 : 10 beträgt.

10. Zweikomponenten-Beschichtungssysteme gemäß einem der Ansprüche 2 bis 9, **dadurch gekennzeichnet, dass** in A5) als Stabilisatoren anorganische oder organische Säuren, Säurehalogenide oder Ester eingesetzt werden.

11. Beschichtungen erhältlich aus Zweikomponenten-Beschichtungssystemen gemäß einem der Ansprüche 1 bis 10.

12. Substrate beschichtet mit Beschichtungen gemäß Anspruch 11.

## Claims

1. Two-component coating systems at least comprising
A) a polyisocyanate component consisting of
a. a polyisocyanate component based on an aromatic prepolymer containing allophanate groups
b. a polyisocyanate component based on a (cyclo)aliphatic polyisocyanate
B) amino-functional polyaspartic esters of the general formula (I) 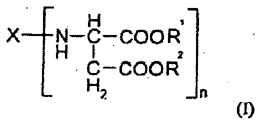 in which
X is an n-valent organic radical obtained by removing the primary amino groups of an n-valent polyamine,
R¹ and R² are identical or different organic radicals which are inert towards isocyanate groups under the reaction conditions, and
n is an integer and is at least 2,
it being possible for up to 50% by weight of the amino-functional polyaspartic esters of the general formula (I) to be replaced by amino-functional polyethers, short-chain diamines and/or optionally blocked polyamines.

2. Two-component coating systems according to Claim 1, **characterized in that** the aromatic allophanates used in A) are prepared by reacting
A1) one or more diphenylmethane diisocyanate isomers
A2) one or more polyhydroxy compounds, at least one being a polyether polyol,
to form an NCO-functional polyurethane prepolymer, and then subsequently reacting its urethane groups thus formed to full or partial allophanatization, with addition of
A3) polyisocyanates, which may be different from those from A1), and
A4) catalysts and
A5) optionally stabilizers,
and thereafter mixing these aromatic allophanates with the polyisocyanate component b).

3. Two-component coating systems according to Claim 2, **characterized in that** the allophanates used in A) are prepared using, in components A1) and A3), mixtures of 4,4'-diphenylmethane diisocyanate and 2,4'-diphenylmethane diisocyanate.

4. Two-component coating systems according to Claim 2 or 3, **characterized in that**, in A1) and A3), 2,4'-diphenylmethane diisocyanate is used.

5. Two-component coating systems according to any of Claims 2 to 4, **characterized in that** zinc(II) compounds are used as catalysts in A4) for the allophanatization.

6. Two-component coating systems according to Claim 5, **characterized in that** zinc(II) compounds used are zinc(II) bis(2-ethylhexanoate), zinc acetylacetonate, Zn(II) bis(n-octoate), Zn(II) bis(stearate), or mixtures thereof.

7. Two-component coating systems according to any of Claims 2 to 6, **characterized in that** polyether polyols are used exclusively in A2) and have number-average molecular weights Mₙ of 2000 to 6000 g/mol, an average OH functionality of ≥ 1.95 and a degree of unsaturated end groups of less than or equal to 0.01 meq/g in accordance with ASTM D2849-69.

8. Two-component coating systems according to Claims 1 to 6, **characterized in that** polyisocyanates based on hexamethylene diisocyanate are used as polyisocyanate component b).

9. Two-component coating systems according to any of Claims 2 to 8, **characterized in that** the molar ratio of the OH groups of the compounds of component A2) to the NCO groups of the polyisocyanates from A1) and A3) is 1:2 to 1:10.

10. Two-component coating systems according to any of Claims 2 to 9, **characterized in that** organic or inorganic acids, acid halides or esters are used as stabilizers in A5).

11. Coatings obtainable from two-component coating systems according to any of Claims 1 to 10.

12. Substrates coated with coatings according to Claim 11.

## Revendications

1. Systèmes de revêtement bicomposants, contenant au moins :
A) un composant polyisocyanate, constitué par
a. un composant polyisocyanate à base d'un prépolymère aromatique comprenant des groupes allophanate,
b. un composant polyisocyanate à base d'un polyisocyanate (cyclo)aliphatique,
B) des esters de l'acide polyasparaginique à fonction amino de formule générale (I) 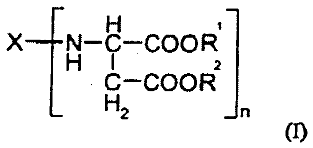 dans laquelle
X représente un radical organique n-valent, qui est obtenu par élimination des groupes amino primaires d'une polyamine n-valente,
R¹, R² représentent des radicaux organiques identiques ou différents, qui sont inertes vis-à-vis des groupes isocyanate dans les conditions de réaction, et
n représente un nombre entier d'au moins 2, jusqu'à 50 % en poids des esters de l'acide polyasparaginique à fonction amino de formule générale (I) pouvant être remplacés par des polyéthers à fonction amino, des diamines à chaîne courte et/ou des polyamines éventuellement bloquées.

2. Systèmes de revêtement bicomposants selon la revendication 1, **caractérisés en ce que** les allophanates aromatiques utilisés en A) sont fabriqués par mise en réaction de
A1) un ou plusieurs isomères de diisocyanate de diphénylméthane,
A2) un ou plusieurs composés polyhydroxy, au moins un étant un polyéther-polyol,
pour former un prépolymère de polyuréthane à fonction NCO, dont les groupes uréthane ainsi formés sont allophanatisés en partie ou en totalité par ajout de
A3) des polyisocyanates, qui peuvent être différents de ceux de A1) et
A4) des catalyseurs et
A5) éventuellement des stabilisateurs,
puis ces allophanates aromatiques sont mélangés avec le composant polyisocyanate b).

3. Systèmes de revêtement bicomposants selon la revendication 2, **caractérisés en ce que** des mélanges de diisocyanate de 4,4'-diphénylméthane et de diisocyanate de 2,4'-diphénylméthane sont utilisés lors de la fabrication des allophanates utilisés en A) dans les composants A1) et A3).

4. Systèmes de revêtement bicomposants selon la revendication 2 ou 3, **caractérisés en ce que** du diisocyanate de 2,4'-diphénylméthane est utilisé en A1) et A3).

5. Systèmes de revêtement bicomposants selon l'une quelconque des revendications 2 à 4, **caractérisés en ce que** des composés de zinc (II) sont utilisés en tant que catalyseurs en A4) pour l'allophanatisation.

6. Systèmes de revêtement bicomposants selon la revendication 5, **caractérisés en ce que** du bis(2-éthylhexanoate) de zinc (II), de l'acétylacétonate de zinc, du bis(n-octoate) de Zn(II), du bis(stéarate) de Zn(II) ou leurs mélanges sont utilisés en tant que composés de zinc (II).

7. Systèmes de revêtement bicomposants selon l'une quelconque des revendications 2 à 6, **caractérisés en ce qu'**exclusivement des polyéther-polyols sont utilisés en A2), ceux-ci présentant des poids moléculaires moyens en nombre Mₙ de 2 000 à 6 000 g/mol, une fonctionnalité OH moyenne ≥ 1,95 et un degré de groupes terminaux insaturés inférieur ou égal à 0,01 meq/g selon ASTM D2849-69.

8. Systèmes de revêtement bicomposants selon les revendications 1 à 6, **caractérisés en ce que** des polyisocyanates à base de diisocyanate d'hexaméthylène sont utilisés en tant que composant polyisocyanate b).

9. Systèmes de revêtement bicomposants selon l'une quelconque des revendications 2 à 8, **caractérisés en ce que** le rapport molaire entre les groupes OH des composés du composant A2) et les groupes NCO des polyisocyanates d'A1) et A3) est de 1:2 à 1:10.

10. Systèmes de revêtement bicomposants selon l'une quelconque des revendications 2 à 9, **caractérisés en ce que** des acides inorganiques ou organiques, des halogénures d'acides ou des esters sont utilisés en A5) en tant que stabilisateurs.

11. Revêtements pouvant être obtenus à partir de systèmes de revêtement bicomposants selon l'une quelconque des revendications 1 à 10.

12. Substrats revêtus avec des revêtements selon la revendication 11.
